# EUROPÄISCHE PATENTSCHRIFT

(11) **EP 1 360 122 B1**
(45) Veröffentlichungstag und Bekanntmachung des Hinweises auf die Patenterteilung: **25.01.2006**
(21) Anmeldenummer: 02710845.5
(22) Anmeldetag: 06.02.2002
(51) Int. Cl.: B65D 63/14, B65B 13/34, F16L 3/233

(54) **MAGAZINSTREIFEN VON BANDSCHLÖSSERN UND WERKZEUG FÜR DESSEN VERARBEITUNG**
MAGAZINE STRIP FOR RATCHETS AND TOOL FOR HANDLING THE SAME
RUBAN DE STOCKAGE POUR FERMETURES DE BANDES, ET OUTIL PERMETTANT LEUR MISE EN PLACE

(30) Priorität: 12.02.2001 EP 01103247
(43) Veröffentlichungstag der Anmeldung: 12.11.2003
(73) Patentinhaber: Hellermann Tyton GmbH, 25436 Tornesch (DE)
(72) Erfinder: KURMIS, Viktor, 25421 Pinneberg (DE)
(74) Vertreter: Glawe, Delfs, Moll
(86) Internationale Anmeldenummer: PCT/EP2002/001240
(87) Internationale Veröffentlichungsnummer: WO 2002/064443

(56) Entgegenhaltungen:
- EP-A- 0 297 337
- US-A- 4 610 067
- US-A- 4 680 834

## Beschreibung

Für das maschinelle Binden von Gegenständen, insbesondere Kabelbäumen, mittels Bandschlaufen, deren Enden von Bandschlössern gehalten werden, führt man die Bandschlösser dem Bindewerkzeug in Form eines Magazinstreifens zu, in welchem die Bandschlösser durch flexible Stege miteinander verbunden sind, die jeweils vor Verwendung im Werkzeug geschnitten werden. Wenn man die Stege nur durch einen Schnitt durchtrennt, bleiben vorstehende Reste übrig. Zwar ist es auch bekannt, diese Reste dadurch zu vermeiden, daß die Stege durch zwei an ihren Enden geführte Schnitte im wesentlichen vollständig entfernt werden. Dabei ergibt sich aber Abfall, der in vielen Anwendungsfällen (beispielsweise im Flugzeug- oder Satellitenbau) nicht unkontrolliert an Ort und Stelle verbleiben darf und deshalb unerwünscht ist. Die Erfindung setzt deshalb voraus, daß beim Durchtrennen des Stegs ein Reststück am Schloß verbleibt. Dies kann scharfkantig sein und zu Verletzungsgefahr führen, insbesondere, wenn der Trennschnitt nicht mittig geführt wird (EP-B-297 337 Fig. 3) oder wenn er an einem seitlich vorstehenden Flansch angeordnet ist (US-A-4610067, Fig. 1). Aber auch dann, wenn der Steg symmetrisch geschnitten wird und unmittelbar von den zueinander parallelen Wänden der Schlösser vorspringt, ist er verhältnismäßig lang im Verhältnis zu den Abmessungen des Schlosses (US-A-4680834, Fig. 6 bis 8).

Der Erfindung liegt daher die Aufgabe zugrunde, das Problem der Verletzungsgefahr aufgrund des von Bandschlössern vorstehenden Stegrests zu verringern. Die erfindungsgemäße Lösung besteht in der Schaffung eines Magazinstreifens von Bandschlössern gemäß Anspruch 1, und ein Werkzeug gemäß Anspruch 10, die zum Halten der Enden von Bändern und Binden von langgestreckten Gegenständen wie Kabelbäumen vorgesehen sind und miteinander durch Stege verbunden sind. Diese Stege haben eine Länge von nicht mehr als 1 mm und/oder einem Achtel der Schloßabmessung in Richtung des Magazinstreifens. Durch die Korrelation des bekannten Merkmals, daß die Breite des Stegs nicht größer als die halbe Schloßbreite ist, und des neuen Merkmals, daß seine Länge nicht größer als 1 mm (die Länge des Stegrests also nicht größer als etwa ½ mm) ist, wird die Verletzungsgefahr beträchtlich reduziert.

Da die Länge des Stegs zwischen benachbarten Schlössern gering ist, ist auch der Abstand zwischen den einander zugewendeten Oberflächen dieser Schlösser gering. Dies kann Probleme bei den Spritzgußformen verursachen, in denen diese Schlösser hergestellt werden. Diese Formen enthalten eine Gruppe von Formnestern für jeweils ein Schloß. Der Abstand zwischen den Schlössern wird durch Formwände gebildet, die die Formnester trennen. Diese Wände können aus Gründen der Stabilität und der Wärmeabfuhr nicht beliebig dünn gemacht werden. Dies ist einer der Gründe, warum in vorbekannten Magazinstreifen der Abstand zwischen benachbarten Schlössern und demzufolge die Steglänge größer ist, als es gemäß der vorliegenden Erfindung wünschenswert ist.

Die Erfindung hat erkannt, daß der.Abstand der Schloßoberflächen und demzufolge die Steglänge dadurch reduziert werden kann, daß die Breite der zueinander etwa parallelen Oberflächenabschnitte der benachbarten Schlösser wesentlich geringer gemacht wird als die Breite der Schlösser. Dies gelingt dadurch, daß die einander zugewendeten Seiten der Schlösser nur in einem mittleren, begrenzten Bereich zueinander im wesentlichen parallel sind, während sie seitlich davon durch Schrägflächen begrenzt sind, die auseinanderstreben und einen keilförmig sich erweiternden Raum bilden. Für die Herstellungsformen bedeutet dies, daß die Formwände zwischen benachbarten Formnestern zum einen durch ein Paar von keilförmigen, dicken und stabilen Strukturen gebildet ist, die zwischen sich ein schmales Wandstück halten, das wegen seiner geringen Breite vergleichsweise dünn sein darf.

Die Breite der im wesentlichen parallelen Oberflächenabschnitte ist zweckmäßigerweise nicht größer als drei Viertel, weiter vorzugsweise als zwei Drittel der Gesamtbreite der Schlösser.

Zwar ist es denkbar, daß die Stege nicht unmittelbar an den den Schloßkörper bildenden Wänden angeordnet sind, sondern an einem Wulst, der von jedem Schloß in Richtung zum benachbarten Schloß vorragt und der gegenüber dem Steg verdickt ist. Jedoch ist auch dann der Abstand zwischen den einander zugewendeten, im wesentlichen parallelen Oberflächenabschnitten der Schlösser in deren Bereich, der den Steg bzw. den Wulst trägt, zweckmäßigerweise nicht größer als 1 mm. Der Wulst kann dadurch ausgebildet sein, daß die Fußbereiche der Stege im Vergleich mit dem Mittelbereich der Stege verdickt sind. Als Fußbereich eines Stegs wird derjenige Bereich des Stegs angesehen, der der den Steg tragenden Wandoberfläche benachbart ist.

Die Stege sind benachbart der Bandeintrittsseite der Schlösser angeordnet. Als Bandeintrittsseite wird diejenige Seite eines Schlosses bezeichnet, von der her die Enden der den zu bindenden Gegenstand umschließenden Bandschlaufe in das Schloß eintreten. Diese Seite ist durch die Anordnung der Sperrorgane im Schloß vorbestimmt.

Bei bekannten Magazinstreifen (US-A-4610067, US-A-4680834) ist der Steg äußerst schmal ausgebildet. Der Grund dafür liegt offensichtlich darin, daß der Stegquerschnitt gering gehalten werden soll, um die Schnittkraft zu reduzieren, die zu seiner Durchtrennung aufgebracht werden muß. Jedoch hat die Schmalheit des Stegs den Nachteil, daß der Magazinstreifen unstabil ist. Insbesondere besteht die Gefahr, daß die Schlösser sich im Verhältnis zueinander um die Streifenlängsrichtung verdrehen. Daraus können sich Probleme bei der Einführung des Magazinstreifens in ein Verarbeitungswerkzeug ergeben. Die Erfindung erreicht eine höhere Stabilität des Magazinstreifens dadurch, daß die Stegbreite mindestens einem Viertel der Schloßbreite gleicht. Trotzdem gelingt es ihr, die Schnittkräfte gering zu halten, nämlich dadurch, daß das Verhältnis von Dicke zu Breite des Stegs gering gehalten wird, nämlich nicht größer als 1/5. Aus dieser Verhältniszahl resultiert in Verbindung mit der großen Stegbreite eine extrem geringe Dicke. Der Steg nimmt damit die Gestalt einer dünnen Folie an, die leicht geschnitten werden kann, aber einer seitlichen Biegung (um eine quer zur Stegebene erstreckte Achse) und einer Torsion des Magazinstreifens großen Widerstand entgegensetzt.

Zweckmäßigerweise ist der Verbindungssteg mit den benachbarten Schlössern einstückig verbunden durch gemeinsame heißplastische Formgebung. Wenn dies nicht möglich ist, sollte der Steg mit einem der beiden Schlösser einstückig und mit dem anderen formschlüssig verbunden sein, wobei zweckmäßigerweise der Formschluß dadurch zustande kommt, daß der Steg eine Endverdickung aufweist, die von dem Material eines Schlosses aus dem heißplastischen Zustand heraus umschlossen ist.

Die angestrebte Kürze der Stegreste hängt bei einer praktisch vorgegebenen Mindestlänge der Stege davon ab, daß diese mittig geschnitten werden. Dies verlangt genaue Positionierung des zu schneidenden Stegs im Verarbeitungswerkzeug. Eine Positionierung der Schlösser im Verarbeitungswerkzeug findet bei bekannten Werkzeugen erst bei der Schloßhalterung statt, die das vorderste Schloß der Schloßkette zur Verarbeitung aufnimmt. Deshalb ist bei bekannten Werkzeugen zur Verarbeitung von Schloßketten vorgesehen, daß der Schnitt nahe der Schloßhalterung durchgeführt wird. Dies ist aber nachteilig, weil sich dort ohnehin viele Bauteile drängen. Die Erfindung will deshalb die Einrichtung zum Trennen der Schlösser in größerem Abstand von der Schloßhalterung vorsehen. Dort kann aber wegen der Abstandstoleranzen der Schlösser keine genaue Positionierung der Schlösser erwartet werden, wenn nur dasjenige Schloß genau positioniert wird, das sich in der Schloßhalterung befindet, und es kann kein exakt mittiger Schnitt eines sehr kurz bemessenen Stegs erwartet werden. Dieses Problem löst die Erfindung dadurch, daß die Trenneinrichtung an einem in Vorschubrichtung der Schlösser beweglichen Trägerteil angeordnet ist, der außerdem eine Positioniereinrichtung für den Magazinstreifen trägt. Dieser kann von dem ohnehin für den Vorschub der Magazinkette vorzusehenden Mitnehmer gebildet sein.

Wenn im vorliegenden Zusammenhang von der Breite eines Bauteils gesprochen wird, so ist stets die Dimension quer zur Längsrichtung des Magazinstreifens und quer zur Richtung der im Schloß vorgesehenen Banddurchtrittsöffnung gemeint. Der Terminus Länge bezieht sich auf eine Dimension in Längsrichtung des Magazinstreifens. Der Terminus Dicke bezieht sich auf die Dimension lotrecht zur Flächenausdehnung des betreffenden Teils.

Die Erfindung wird im folgenden näher unter Bezugnahme auf die Zeichnung erläutert, die ein vorteilhaftes Ausführungsbeispiel veranschaulicht. Es zeigen:
- Fig. 1: einen Längsschnitt durch drei Schlösser eines Magazinbands,
- Fig. 2: eine der Fig. 1 entsprechende Draufsicht in Pfeilrichtung "II",
- Fig. 3: die teilweise geschnittene Ansicht eines Schlosses im gebundenen Zustand,
- Fig. 4: eine Draufsicht auf die Anordnung gemäß Fig. 3 in Pfeilrichtung "IV",
- Fig. 5 bis 7: drei schematische Schnitte durch ein Werkzeug in verschiedenen Funktionsstadien.
- Fig. 8: eine Ansicht der Sperrklinkenanordnung und

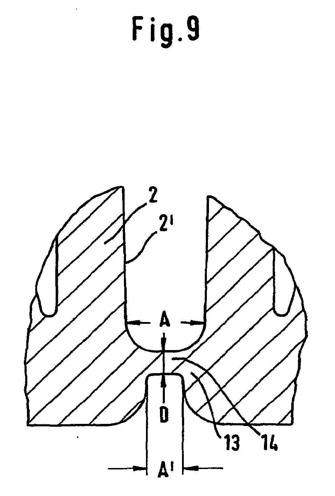

- Fig. 9: einen stark vergrößerten Längsschnitt durch einen Steg und die angrenzenden Schloßteile.

Jedes der Schlösser, die in der Darstellung stark vergrößert sind, umfaßt eine umlaufende Wand, die aus zur Richtung des Magazinstreifens parallelen Wandabschnitten 1, zu dieser Richtung senkrecht verlaufenden Wandabschnitten 2 und schräg verlaufenden Übergangsabschnitten 3 zusammengesetzt ist. Sie enthält eine Durchgangsöffnung 4 für die zu bindenden Bänder und Sperrklinken 5, die mit einer Zahnung dieser Bänder zusammenwirken. Die Sperrklinken 5 sind so angeordnet, daß sie die gezahnten Bänder in Pfeilrichtung "6" in das Schloß eintreten lassen, in der Gegenrichtung aber sperren. Die Seite 7 der Schlösser wird daher als Bandeintrittsseite bezeichnet.

Benachbarte Schlösser des Magazinstreifens sind durch Stege 10 miteinander verbunden. Diese sind in der Mehrzahl einstükkig mit beiden benachbarten Schlössern ausgeführt. Je nach Art der Herstellung können sie aber auch formschlüssig mit wenigstens einem der beiden Schlösser verbunden sein. Dies ist dargestellt bei dem Steg 10a, dessen verdickter, hinterschnittener Kopf 11 von dem Wandmaterial 12 des zugehörigen Schlosses umschlossen ist. Die Umschließung kommt dadurch zustande, daß das Ende des Stegs 10a vor der heißplastischen Formung des Schlosses in dessen Form eingelegt wurde und daher von dem Material 12 umströmt wurde, bevor es erstarrte.

Der Abstand A der Oberflächen 2' der Wandabschnitte 2 in ihrem dem Steg 10 nahen Bereich beträgt zweckmäßigerweise 0,8 bis 1,3 mm, weiter zweckmäßigerweise bis 1,1 mm. Bezogen auf die Länge des Schlosses soll sie ein Sechstel, vorzugsweise ein Achtel, nicht überschreiten. Die Fußbereiche 13 der Stege 10 sind gegenüber dem Mittelbereich 14 wulstartig verdickt ausgeführt. Dies verbessert zum einen den Kraftübergang zwischen den Wandabschnitten 2 und den Stegen 10 und vermindert auch die nach dem Schnitt übrig bleibende Länge des dünnen, verletzungsgefährlichen Stegrests. Die Länge des dünnen Stegteils zwischen den Wulsten 13 ist zweckmäßigerweise nicht größer als 0,6 mm. Die Länge des verbleibenden Stegrests soll (einschließlich Wulst) nicht größer als 0,7 mm und/oder nicht größer als ein Zehntel (vorzugsweise ein Zwölftel) der Schloßlänge sein. Die Stege 10 haben im dargestellten Beispiel (einschließlich Wulst) eine Länge, die etwa einem Achtel der Länge der Schlösser entspricht.

Die Dicke D des Stegs richtet sich nach der geforderten Flexibilität und Festigkeit und beträgt beispielsweise 0,2 bis 0,4 mm bzw. weniger als ein Zehntel, vorzugsweise weniger als ein Fünfzehntel der Schloßhöhe.

Die Breite des Stegs ist nicht größer als etwa die halbe Breite der Schlösser und nicht größer als die Breite des Bandes. Gegenüber der Schloßkantenlinie 15 sind daher die Seitenkanten 8 der Stege 10 um eine Strecke 16 zurückgesetzt, die in der Größenordnung von 2 mm liegen sollte und wenigstens ein Achtel, vorzugsweise wenigstens ein Fünftel, der Schloßbreite betragen sollte. Jedoch ist die Stegbreite mindestens etwa ein Viertel bis ein Drittel der Schloßbreite. Das Verhältnis von Dicke zu Breite der Stege beträgt in der Regel 1/5 bis 1/10 und gegebenenfalls mehr.

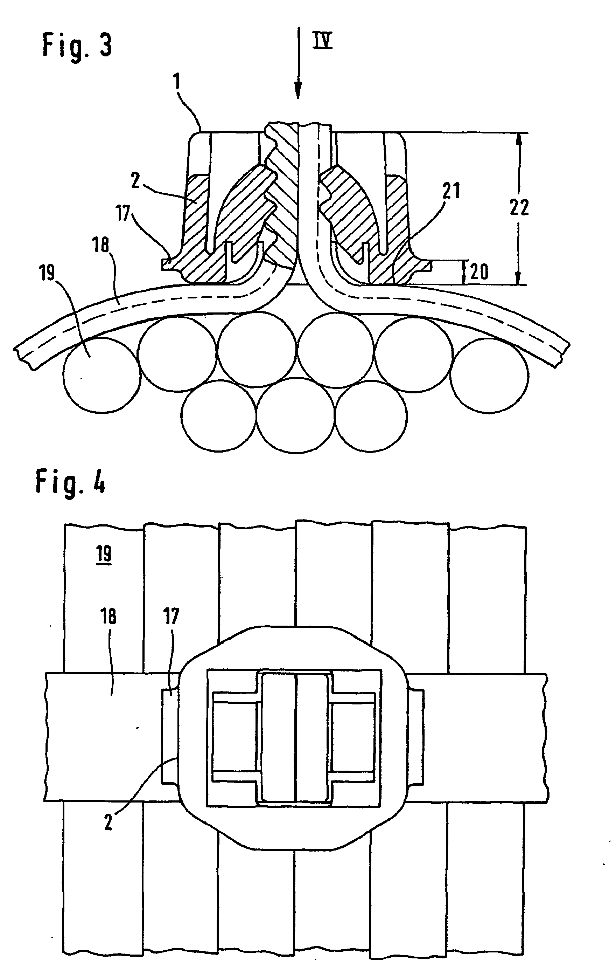

Bei der Verarbeitung der Schlösser werden diese durch einen Schnitt etwa in der Mitte des Stegs vereinzelt. Es bleiben Stegreste 17 stehen, deren Lage im Verhältnis zum Schloß, zur Bandschlaufe 18 und zum gebundenen Gegenstand 19 in Fig. 3 und 4 veranschaulicht ist. Man erkennt in Fig. 3, daß der Stegrest 17 in der Tiefe des Raumzwickels liegt, der von dem benachbarten Wandabschnitt 2 des Schlosses und der Bandschlaufe 18 bzw. dem Gegenstand 19 gebildet ist. Die Wahrscheinlichkeit, daß eine Person an dieser Stelle versehentlich derart entlangstreift, daß die dadurch verletzt werden könnte, ist angesichts der geringen Länge des Stegrests und seiner geschützten Lage höchst unwahrscheinlich.

Der geringe Abstand der Schlösser im Magazinstreifen voneinander, der die geringe Länge der Stege ermöglicht, verlangt eine geringe Wanddicke der zur Herstellung verwendeten Form zwischen den einander gegenüberstehenden Wandabschnitten 2 benachbarter Schlösser. Wenn diese geringe Wanddicke über die gesamte Breite der Schlösser vorgesehen werden müßte, könnte dies problematisch sein. Jedoch ist sie unbedenklich, wenn erfindungsgemäß die Breite der Wandabschnitte 2 und damit die Breite der genannten, dünnen Formwand wesentlich geringer ist als die gesamte Breite der Schlösser. Zwischen den schräg verlaufenden Wandabschnitten 3 benachbarter Schlösser kann die Formwand reichlich dimensioniert werden und bietet daher gute Stabilität und Wärmeabfuhr.

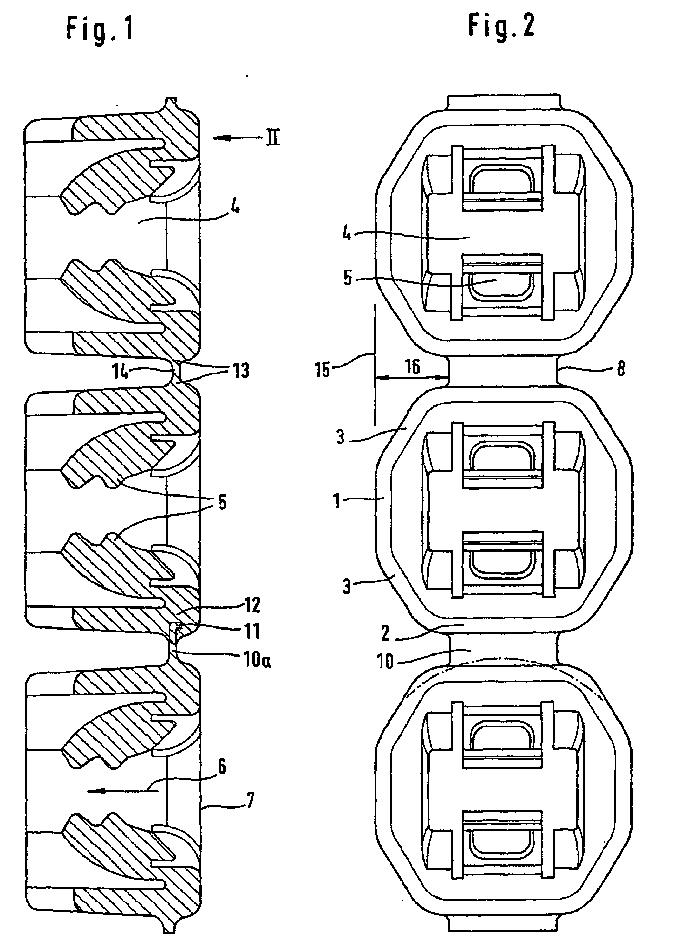

Der Breitenbereich der Oberflächen 2' der Wandabschnitte 2, in welchem diese etwa parallel zueinander verlaufen, sollte nicht größer als drei Viertel und weiter vorzugsweise zwei Drittel der Gesamtbreite der Schlösser sein. Es versteht sich, daß die Schloßwände zur Bildung der Wandabschnitte 2 und 3 nicht streng polygonal aufgebaut zu sein brauchen, obwohl dies zweckmäßig ist. Der etwa parallele Verlauf der Oberflächen 2' der die Stege tragenden Wandabschnitte 2 und der dazu geneigte Verlauf der äußeren Wandabschnitte 3 kann auch durch einen durchgehenden Bogen nachgebildet sein, wie er in Fig. 2 bei dem untersten Schloß strichpunktiert angedeutet ist. Neigungen von weniger als 15° sind als im wesentlichen parallel zu betrachten, ggf. auch größere Neigungen.

Die Höhe 20 aller Kanten des Stegrests 17 über der benachbarten Kante 21 der Bandeintrittsseite, über die das Band 18 im gebundenen Zustand abläuft, sollte (gemessen parallel zum Wandabschnitt 2) nicht größer als 2 mm, vorzugsweise nicht größer als 1,2 mm, sein. Im dargestellten Beispiel ist dieses Maß etwa 1 mm. Ausgedrückt in Bruchteilen der Schloßhöhe 22 sollte dieses Maß ein Viertel, vorzugsweise ein Fünftel, nicht überschreiten.

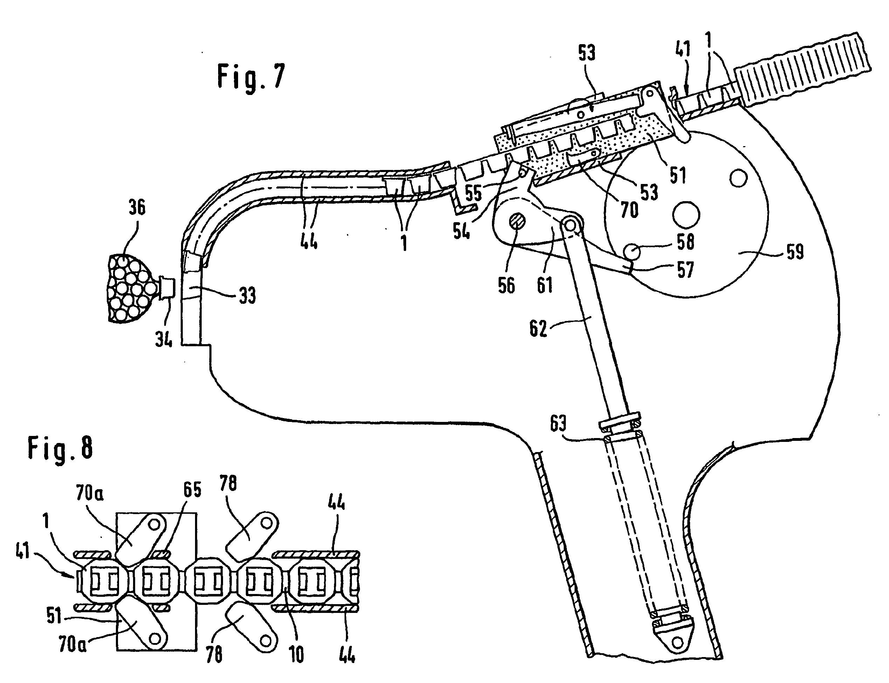

Im folgenden wird das Verarbeitungswerkzeug anhand der Fig. 1 bis 8 erläutert. Der Werkzeugkörper 31 mit einem Griff 32 weist an seiner Stirnseite eine nicht näher dargestellte Halterung 33 für ein Schloß 34 auf, durch das mit im vorliegenden Zusammenhang uninteressanten Mitteln ein Band 35 in Richtung der Pfeile hindurchgeführt wird, um einen zu bindenden Gegenstand 36 in Form einer Schlaufe 37 geschlungen und mit seinem freien Ende in das Schloß 34 zurückgeführt wird. Danach wird das Band gespannt, der überstehende Strang 35 abgeschnitten und das Schloß 34 aus der Schloßhalterung 33 entlassen (Fig. 7).

Um einen weitgehend automatischen Betrieb zu ermöglichen, werden die zu verarbeitenden Schlösser der Schloßhalterung 33 selbsttätig zugeführt. Von einem nicht dargestellten, stationären Großmagazin gelangen sie in Form einer Schloßkette 41, in der die einzelnen Schlösser 1 durch Stege 10 miteinander verbunden sind, zum Werkzeugkörper 31. Dort wird die Schloßkette 41 von einem Führungskanal 44 aufgenommen, der bei der Schloßhalterung 33 mündet.

An dem Führungskanal 44 ist eine Einrichtung 50 zum Vorschieben und Vereinzeln der Schlösser vorgesehen. Die Darstellung des Führungskanals 44 ist im Bereich dieser Einrichtung 50 unterbrochen. Es versteht sich aber, daß auch in diesem Bereich eine Führung für die Schloßkette 41 vorgesehen ist. Parallel zu dieser Schloßführung ist ein Schlitten 51, der in der Zeichnung durch Punktierung verdeutlicht ist, in Pfeilrichtung 52 parallel zur Schloßführung beweglich gelagert. Zwei Führungswände 53 deuten die Schlittenführung schematisch an. Zum Antrieb des Schlittens ist ein Hebelarm 54 vorgesehen, der bei 55 in geeigneter Weise mit dem Schlitten 51 zusammenwirkt und um eine am Werkzeugkörper 31 feste Achse 56 schwenkbar ist. Er ist starr verbunden mit einem Nockenhebel 57, der in die Umlaufbahn von zwei Nocken 58 ragt, die an einer Nockenscheibe 59 angeordnet sind, die von einem Elektromotor um die Achse 60 im Gegenuhrzeigersinn drehend angetrieben ist.

Mit den Hebelarmen 54, 57 ist ein dritter Hebelarm 61 starr verbunden, dessen Ende an die Druckstange 62 einer Druckfeder 63 angelenkt ist. Die Feder 63 drückt den Hebelarm 61 (in der Darstellung) nach oben und dadurch das Ende des Hebelarms 54 in Richtung zur Werkzeugstirn. Kommt hingegen ein Nocken 58 in Eingriff mit dem Nockenhebel 57, wie dies in Fig. 7 dargestellt ist, wird der Nockenhebel 57 nach unten gedrückt.

Gleichzeitig wird auch der Hebelarm 61 nach unten bewegt, wodurch die Feder 63 gespannt wird. Der Hebelarm 54 und mit ihm der Schlitten 51 werden (in der Zeichnung) nach rechts bewegt, also entgegen der Vorschubrichtung der Schloßkette 41. Wenn der Nocken 58 den Nockenhebel 57 passiert hat, versucht die Feder 63, die Hebelanordnung 54, 57, 61 im Gegenuhrzeigersinn zu schwenken und dadurch den Schlitten 51 in Vorschubrichtung zu bewegen.

Am Schlitten 51 ist eine Sperrklinke 70 angelenkt. Sie ist so ausgebildet und angeordnet, daß ihre Spitze durch eine nicht gezeigte Feder in Eingriff mit der Schloßkette 41 gedrängt wird. Allgemeiner gesprochen, weist die Klinke 70 eine Fläche auf, die mit einer nach hinten gewendeten Fläche eines Schlosses in Eingriff gelangen kann, um eine Vorschubkraft darauf auszuüben.

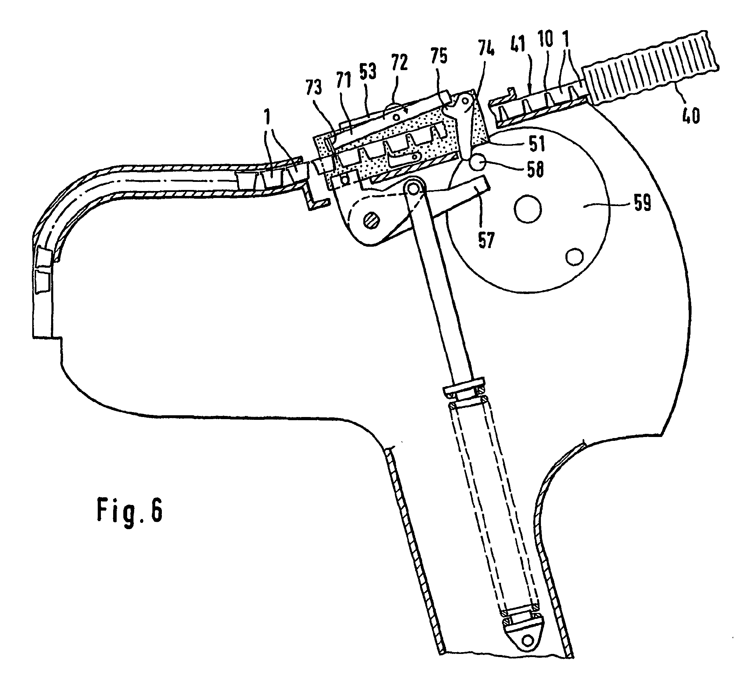

Ferner ist an dem Schlitten 51 eine Wippe 71 angelenkt, die durch eine nicht dargestellte Feder in Pfeilrichtung 72 beaufschlagt ist. Sie trägt an ihrem vorderen Ende eine Klinge 73, die dazu bestimmt ist, bei einer Bewegung entgegen der Pfeilrichtung 72 einen Steg 10 zwischen aufeinanderfolgenden Schlössern 1 zu durchtrennen. Um diese Schneidbewegung der Wippe 71 zu veranlassen, ist ein Nockenhebel 74 vorgesehen, der mit einer Nase 75 das hintere Ende der Wippe 71 erfaßt. Sein unteres Ende ragt in die Umlaufbahn der Drehnocken 58. Wird es gemäß Fig. 6 von einem Drehnocken erfaßt, so wird der Schwenkhebel 74 im Uhrzeigersinn und die Wippe 71 entgegen der Pfeilrichtung 72 verschwenkt. Die Klinge 73 führt dabei den Schnitt aus. In der dargestellten Ausführung ist der Nokkenhebel 44 am Schlitten angelenkt. Er kann statt dessen auch am Werkzeugkörper angebracht werden, sofern sein Zusammenwirken mit der Wippe gewährleistet ist.

Die Klinke 70 ist so ausgebildet, daß sie stets in gleicher Weise mit den Schlössern 1 zusammenwirkt. Das jeweils von der Klinke 70 erfaßte Schloß befindet sich daher in genau definierter Position im Verhältnis zur Klinke. Da die Klinke 70 und die Klinge 73 in festem gegenseitigen Abstand an dem Schlitten 51 angeordnet sind und da die Schlösser stets gleiche Gestalt und gleichen Abstand voneinander haben, ist Gewähr dafür gegeben, daß die Klinge 73 den Steg 10 zwischen zwei aufeinanderfolgenden Schlössern 1 stets genau mittig trifft. Diese Gewähr wäre nicht gegeben, wenn die Schneideinrichtung gehäusefest am Werkzeugkörper angeordnet wäre. Denn die jeweilige Stellung des Schlittens im Verhältnis zum Werkzeugkörper ist unbestimmt, wie aus der späteren Darstellung der Arbeitsweise hervorgeht.

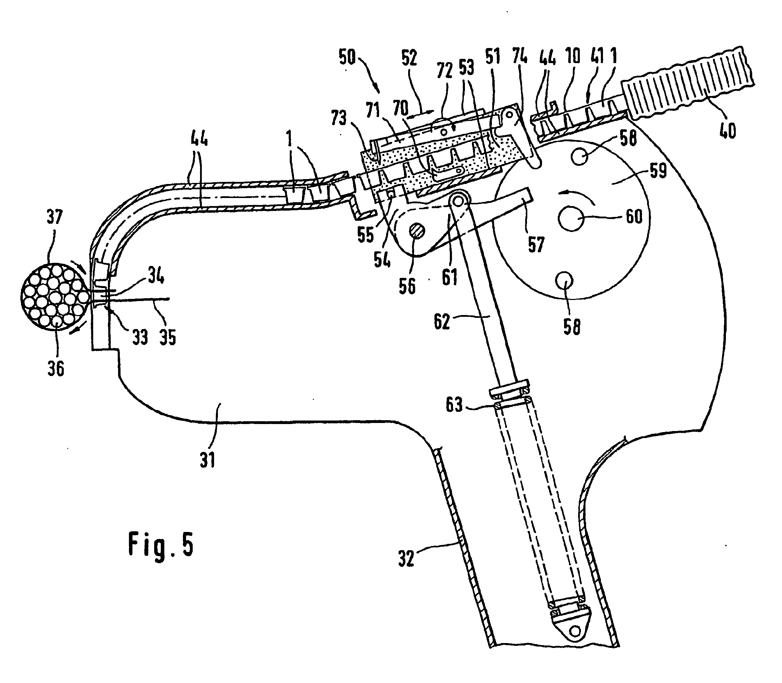

Da die Darstellung in Fig. 5 bis 7 sehr schematisch ist, ist in Fig. 8 dargestellt, wie die praktische Ausführung des Sperrmechanismus zweckmäßigerweise gestaltet ist. Der Schlitten 51 ist beiderseits der Schloßkette 41 angeordnet und bildet Führungen 65 für diese. Die Darstellung der Schneideinrichtung ist weggelassen. Beiderseits der Schloßkette 41 trägt er je eine Sperrklinke 70a, die durch eine nicht gezeigte Feder von der Seite her in den zweckmäßigerweise keilförmig gestalteten Zwischenraum zwischen zwei Schlössern 1 gedrückt wird. Dadurch wird eine eindeutige Positionierung der Schlösser gegenüber dem Schlitten 51 erreicht. Fest am Werkzeuggehäuse ist ein weiteres Paar von Sperrklinken 78 angeordnet, die gleichfalls durch Federkraft gegen die Schlösser gedrückt sind und dafür sorgen, daß beim Rücklauf des Schlittens 51 (in Fig. 8 nach rechts) die Schloßkette festgehalten wird.

Im Zustand der Fig. 5 findet das Binden des Gegenstands 36 mittels der Schlaufe 37 statt. In diesem Zustand übt die Feder 63 über die Hebelanordnung 61, 54 eine Vorschubkraft auf den Schlitten 51 aus, die über die Sperrklinke 70 auf die Schloßkette 41 übertragen wird. Dadurch wird das vorderste Schloß 34 sicher in die Schloßhalterung 33 gedrückt, wobei die Position des Schlittens 51 durch die Länge der zwischen dem vordersten Schloß 34 und der Sperrklinke 70 befindlichen Schlösser bestimmt wird, an denen sich der Schlitten unter der Federkraft 63 abstützt. Da diese vor dem Schlitten 51 befindliche Schloßreihe aus vereinzelten Schlössern besteht, deren Abstand nicht unbedingt übereinstimmt mit ihrem Abstand vor der Vereinzelung, ist die Position des Schlittens 51 in diesem Zustand zufälligen Schwankungen innerhalb eines gewissen Toleranzrahmens unterworfen. Dies ist der Grund, warum die Schneideinrichtung 73 gemeinsam mit der Klinke 70 an dem Schlitten 51 angeordnet ist.

Während des Arbeitszyklus des Werkzeugs dreht sich die Nockenscheibe 59 kontinuierlich in Pfeilrichtung. Wenn der Bindevorgang abgeschlossen ist, erreicht ein Nocken 58 das untere Ende des Nockenhebels 74 und verschwenkt diesen gemäß Fig. 6, wodurch das letzte im Schlitten befindliche Schloß von der übrigen Schloßreihe abgetrennt wird. Wenn der Nocken 58 den Nockenhebel 74 verlassen hat, schwenkt dieser zusammen mit der Wippe 71 unter der Federkraft 72 wieder in die Stellung gemäß Fig. 5 und 7 zurück.

Der Nocken 58 erreicht nun das Ende des Nockenhebels 57 und verschwenkt dadurch die Nockenanordnung im Uhrzeigersinn. Dadurch wird die Feder 63 gespannt und der Schlitten 51 um etwas mehr als eine Schloßabmessung nach hinten (rechts in Fig. 7) verschoben. Während dieses Rückhubs halten die Sperrklinken 78 (Fig. 8) die Schloßreihe fest. Die Klinke 70 (bzw. die Klinken 70a) gleiten dabei an einem Schloß entlang bis über dessen Rückfläche hinaus, die beim nächsten Vorschub erfaßt werden soll. Sobald der Nocken 58 das Ende des Nockenhebels 57 verlassen hat, bewegt sich der Schlitten 51 unter der Wirkung der Feder 63 in Vorschubrichtung. Dabei greift zunächst die Klinke 70 (bzw. die Klinken 70a) in die nächstgelegene Schloßlücke ein. Sobald der verbundene Gegenstand 36 mit dem vordersten Schloß 34 vom Werkzeug entfernt wurde und daher die Schloßhalterung leer ist, wird der Schlitten 51 zusammen mit der Schloßkette weiterbewegt, bis das nunmehr vorderste Schloß die Schloßhalterung 33 erreicht hat. Der Widerstand, den dieses Schloß in der Schloßhalterung vorfindet, wird über die weitere Schloßkette bis zur Sperrklinke 70 und dem Schlitten 51 übertragen und hält diesen fest. Dabei wirkt ständig die Kraft der Feder 63 bzw. die Vorschubkraft des Schlittens 51 auf die vor dem Schlitten befindliche Schloßkette.

Da das Schloß vor der Klinke 70 noch einstückig mit der folgenden Kette von Schlössern verbunden ist, wird auch diese entsprechend nachgezogen.

Die Erfindung hat den Vorteil, daß der Trennschnitt zwischen aufeinanderfolgenden Schlössern an sehr genau definierter Stelle erfolgen kann und demzufolge die Länge des Stegs 10, der aufeinanderfolgende Schlösser verbindet, sehr gering bemessen werden kann. Die an den Schlössern verbleibenden Reste sind so kurz, daß sie keine Verletzungsgefahr verursachen. Sie brauchen nicht beseitigt zu werden. Für diese Vereinzelung der Schlösser genügt daher ein abfallfreier Schnitt. Auch besteht ein Vorteil der Erfindung darin, daß die Vereinzelung der Schlösser in beträchtlicher, beliebiger Entfernung von der Werkzeugstirn stattfinden kann, wo die Unterbringung einer Schneideinrichtung für die Schlösser auf Platzschwierigkeiten stößt.

## Patentansprüche

1. Magazinstreifen von Bandschlössern (1), die zum Halten der Enden von Bändern (18) zum Binden von langgestreckten Gegenständen wie Kabelbäumen (19) vorgesehen sind und benachbart ihrer Bandeintrittsseite (7) durch Stege (10) verbunden sind, deren Breite nicht größer als die halbe Schloßbreite ist und deren Länge nicht mehr als 1,3 mm und/oder ein Sechstel der Schloßabmessung in Richtung des Magazinstreifens beträgt, **dadurch gekennzeichnet, daß** die einander zugewendeten Seiten der Schlösser mittlere, im wesentlichen parallele Oberflächenabschnitte (2'), zwischen denen die Stege (10) angeordnet sind und deren Breite nicht größer als drei Viertel der Gesamtbreite der Schlösser ist, und seitlich davon sich voneinander entfernende Schrägflächen (3) aufweisen.

2. Magazinstreifen nach Anspruch 1, **dadurch gekennzeichnet, daß** die Stege (10) eine Länge von nicht mehr als 1 mm und/oder einem Achtel der Schloßabmessung in Richtung des Magazinstreifen haben.

3. Magazinstreifen nach Anspruch 1 oder 2, **dadurch gekennzeichnet, daß** die Breite der im wesentlichen parallelen Oberflächenabschnitte (2') nicht größer als zwei Drittel der Gesamtbreite der Schlösser ist.

4. Magazinstreifen nach einem der Ansprüche 1 bis 3, **dadurch gekennzeichnet, daß** der Abstand der im wesentlichen parallelen Oberflächenabschnitte (2') in ihrem dem Steg (10) nahen Bereich nicht größer als 1,3 mm ist.

5. Magazinstreifen nach einem der Ansprüche 1 bis 4, **dadurch gekennzeichnet, daß** die Fußbereiche (13) der Stege (10) gegenüber den Mittelbereichen (14) der Stege verdickt sind.

6. Magazinstreifen nach einem der Ansprüche 1 bis 5, **dadurch gekennzeichnet, daß** die Breite der Stege (10) mindestens einem Viertel der Schloßbreite gleicht.

7. Magazinstreifen nach einem der Ansprüche 1 bis 6, **dadurch gekennzeichnet, daß** das Verhältnis von geringster Dicke zu Breite der Stege (10) nicht größer als 1/5 ist.

8. Magazinstreifen nach einem der Ansprüche 1 bis 7, **dadurch gekennzeichnet, daß** benachbarte Schlösser und der sie verbindende Steg (10) einstückig ausgebildet sind.

9. Magazinstreifen nach einem der Ansprüche 1 bis 8, **dadurch gekennzeichnet, daß** ein zwei benachbarte Schlösser verbindender Steg (10a) mit einem der beiden Schlösser einstückig und dem anderen formschlüssig verbunden ist.

10. Werkzeug zum Binden von Gegenständen, insbesondere Kabelbäumen, mittels eine Bandes (37), dessen Enden von einem Schloß (34) zu halten sind, das Teil eines Magazinstreifens nach einem der Ansprüche 1 bis 7 ist, wobei das Werkzeug eine Einrichtung (73) zum Trennen der Schlösser (1) voneinander aufweist, **dadurch gekennzeichnet, daß** die Trenneinrichtung (73) an einem in Vorschubrichtung (52) der Schlösser (1) beweglichen Trägerteil (51) angeordnet ist, der außerdem eine Positioniereinrichtung (70) für den Magazinstreifen (41) trägt.

11. Werkzeug nach Anspruch 10, **dadurch gekennzeichnet, daß** die Positioniereinrichtung (70) von mindestens einem Mitnehmer (70a) gebildet und der Trägerteil (51) zum Vorschub des Magazinstreifens (41) angetrieben ist.

## Claims

1. A magazine strip of strap buckles (1) which are provided for retaining the ends of straps (18) for binding elongate articles, such as wiring harnesses (19), and adjacent their strap inlet side (7) are connected by webs (10) whose width is not greater than half the buckle width and whose length is not more than 1.3 mm and/or a sixth of the buckle dimension in the direction of the magazine strip, **characterised in that** the mutually facing sides of the buckles have central substantially parallel surface portions (2'), between which the webs (10) are arranged and whose width is not greater than three quarters of the total width of the buckles, and laterally thereof have inclined surfaces (3) diverging from one another.

2. A magazine strip according to Claim 1, **characterised in that** the webs (10) are of a length of not more than 1 mm and/or one eighth of the buckle dimension in the direction of the magazine strip.

3. A magazine strip according to Claim 1 or 2, **characterised in that** the width of the substantially parallel surface portions (2') is not greater than two thirds of the total width of the buckles.

4. A magazine strip according to any one of Claims 1 to 3, **characterised in that** the distance apart of the substantially parallel surface portions (2') in its region near the web (10) is not greater than 1.3 mm.

5. A magazine strip according to any one of Claims 1 to 4, **characterised in that** the base zones (13) of the webs (10) are thickened relative to the central zones (14) of the webs.

6. A magazine strip according to any one of Claims 1 to 5, **characterised in that** the width of the webs (10) is equal to at least one quarter of the buckle width.

7. A magazine strip according to any one of Claims 1 to 6, **characterised in that** the ratio of smallest thickness to width of the webs (10) is not greater than 1/5.

8. A magazine strip according to any one of Claims 1 to 7, **characterised in that** adjacent buckles and the web (10) connecting them are formed in one piece.

9. A magazine strip according to any one of Claims 1 to 8, **characterised in that** a web (10a) connecting two adjacent buckles is formed in one piece with one of the two buckles and is connected in a form-locking manner to the other buckle.

10. An implement for binding articles, in particular wiring harnesses, by means of a strap (37) whose ends are to be retained by a buckle (34) which is part of a magazine strip according to any one of Claims 1 to 7, wherein the implement has a device (73) for separating the buckles (1) from one another, **characterised in that** the separating device (73) is disposed on a support member (51) which is movable in the feed direction (52) of the buckles (1) and which additionally carries a locating means (70) for the magazine strip (41).

11. An implement according to Claim 10, **characterised in that** the locating means (70) is formed by at least one dog (70a) and the support member (51) is driven so as to feed the magazine strip (41).

## Revendications

1. Bande de fermoirs (1) pour ruban pour magasin de chargement qui sont prévus pour maintenir les extrémités de rubans (18) afin de lier des objets allongés tels que des faisceaux de câbles (19) et qui sont reliés, à proximité de leur côté d'entrée de ruban (7), par des barrettes (10) dont la largeur n'est pas supérieure à la moitié de la largeur des fermoirs et dont la longueur n'est pas supérieure à 1,3 mm et/ou est égale à un sixième de la dimension du fermoir dans la direction de la bande, **caractérisée en ce que** les côtés tournés l'un vers l'autre des fermoirs présentent des sections de surface 2' centrales, sensiblement parallèles, entre lesquelles sont disposées les barrettes (10) et dont la largeur n'est pas supérieure à trois quarts de la largeur totale des fermoirs, et présentent sur le côté de ces sections des surfaces obliques (3) s'éloignant les unes des autres.

2. Bande pour magasin de chargement selon la revendication 1, **caractérisée en ce que** les barrettes (10) ont une longueur non supérieure à 1 mm et/ou à un huitième de la dimension du fermoir dans la direction de la bande magasin.

3. Bande pour magasin de chargement selon la revendication 1 ou 2, **caractérisée en ce que** la largeur des sections de surface 2' sensiblement parallèles n'est pas supérieure à deux tiers de la largeur totale des fermoirs.

4. Bande pour magasin de chargement selon l'une des revendications 1 à 3, **caractérisée en ce que** l'écartement des sections de surface 2', sensiblement parallèles, n'est pas supérieur à 1,3 mm dans leur zone proche de la barrette (10).

5. Bande pour magasin de chargement selon l'une des revendications 1 à 4, **caractérisée en ce que** les zones de pied (13) des barrettes (10) sont surépaissies par rapport aux zones centrales (14) des barrettes.

6. Bande pour magasin de chargement selon l'une des revendications 1 à 5, **caractérisée en ce que** la largeur des barrettes (10) est égale à au moins un quart de la largeur des fermoirs.

7. Bande pour magasin de chargement selon l'une des revendications 1 à 6, **caractérisée en ce que** le rapport de la plus petite épaisseur à la largeur des barrettes (10) n'est pas supérieur à 1/5.

8. Bande magasin selon l'une des revendications 1 à 7, **caractérisée en ce que** des fermoirs voisins et la barrette (10) les reliant sont réalisés d'un seul tenant.

9. Bande pour magasin de chargement selon l'une des revendications 1 à 8, **caractérisée en ce qu'**une barrette (10a) reliant deux fermoirs voisins est reliée à l'un des deux fermoirs d'un seul tenant et à l'autre par complémentarité de formes.

10. Outil pour attacher des objets, en particulier des faisceaux de câbles, au moyen d'un ruban (37) dont les extrémités doivent être maintenues par un fermoir (34) qui fait partie d'une bande pour magasin de chargement selon l'une des revendications 1 à 7, l'outil comportant un dispositif (13) pour séparer les fermoirs (1) les uns des autres, **caractérisé en ce que** le dispositif de séparation (73) est disposé sur un élément de support (51) déplaçable dans le sens d'avance (52) des fermoirs (1) et qui porte en outre un dispositif de positionnement (70) pour la bande magasin (41).

11. Outil selon la revendication 10, **caractérisé en ce que** le dispositif de positionnement (70) est formé par au moins un entraîneur (70a) et l'élément de support (51) est entraîné pour l'avance de la bande (41).
